(19) **Europäisches Patentamt · European Patent Office · Office européen des brevets**

(11) **EP 1 479 234 B1**

(12) **FASCICULE DE BREVET EUROPEEN**

(45) Date de publication et mention de la délivrance du brevet:
**24.10.2012 Bulletin 2012/43**

(21) Numéro de dépôt: **03720633.1**

(22) Date de dépôt: **21.02.2003**

(51) Int Cl.:
*H04N 21/8355* (2011.01)    *H04N 21/4627* (2011.01)
*H04N 7/16* (2011.01)    *H04N 7/167* (2011.01)

(86) Numéro de dépôt international:
**PCT/FR2003/000583**

(87) Numéro de publication internationale:
**WO 2003/073761 (04.09.2003 Gazette 2003/36)**

(54) **PROCEDE DE TRAITEMENT DE DONNEES CHIFFREES POUR UN PREMIER DOMAINE ET RECUES DANS UN RESEAU APPARTENANT A UN SECOND DOMAINE**

VERARBEITUNGSVERFAHREN FÜR DATEN, DIE FÜR EINEN ERSTEN BEREICH VERSCHLÜSSELT SIND UND IN EINEM ZU EINEM ZWEITEN BEREICH GEHÖRENDEN NETZWERK EMPFANGEN WURDEN

METHOD FOR PROCESSING ENCODED DATA FOR A FIRST DOMAIN RECEIVED IN A NETWORK PERTAINING TO A SECOND DOMAIN

(84) Etats contractants désignés:
**DE FR GB IT**

(30) Priorité: **25.02.2002 FR 0202330**

(43) Date de publication de la demande:
**24.11.2004 Bulletin 2004/48**

(73) Titulaire: **Thomson Licensing**
**92130 Issy-les-Moulineaux (FR)**

(72) Inventeur: **DURAND, Alain**
**F-35000 Rennes (FR)**

(74) Mandataire: **Ståhl, Björn Niclas et al**
**Technicolor**
**European Patent Operations**
**1-5 Rue Jeanne d'Arc**
**92130 Issy-les-Moulineaux (FR)**

(56) Documents cités:
**EP-A- 0 858 184    EP-A2- 0 969 667**
**WO-A-00/56068    WO-A-00/62505**
**WO-A1-01/15448    WO-A1-01/55850**

**Description**

Domaine de l'invention

La présente invention concerne le domaine de la protection contre la copie de données numériques et contre l'accès illégal à de telles données, en particulier dans le cas de données circulant dans des réseaux numériques locaux tels des réseaux domestiques numériques.

Etat de la technique

Il est connu dans le contexte de la protection contre la copie illicite de données numériques des systèmes dans lesquels un contenu numérique peut être copié pour être utilisé dans un domaine déterminé. On entend par domaine un ensemble d'appareils appartenant par exemple à un même réseau domestique, ces appareils partageant un secret propre au domaine, par exemple une clé de chiffrement cryptographique. Un appareil appartenant à un domaine peut être un appareil portable. Son appartenance à un domaine particulier sera déterminée par sa connaissance du secret propre à ce domaine particulier.

Les contenus numériques dans un tel domaine peuvent être de trois sortes :

- « copie libre » : ce type de contenu peut être enregistré et relu dans n'importe quel domaine, il n'est donc pas nécessaire de connaître un secret propre à un domaine pour lire ce type de contenu ;
- « copie privée » : ce type de contenu ne peut être copié que pour un domaine particulier dans lequel il pourra être relu ; le contenu est enregistré sous une forme qui nécessite la connaissance du secret du domaine particulier pour pouvoir être relu. Ce type de contenu ne peut pas être lu sur un appareil qui n'appartient pas au domaine particulier.
- « lecture seule » : ce type de contenu peut seulement être lu dans un domaine particulier mais il ne peut pas être copié ; ou si des copies du contenu sont effectuées, celles-ci ne pourront pas être relues ensuite.

Un contenu numérique entre généralement dans un domaine à travers un dispositif d'accès ou dispositif source. Ce type de dispositif récupère des données numériques à travers un canal externe au domaine et les diffuse aux autres dispositifs du domaine, par exemple grâce à un bus numérique reliant les différents appareils du domaine. Un dispositif source peut notamment être un décodeur numérique destiné à recevoir des programmes vidéo de l'extérieur d'un réseau domestique numérique, via une antenne satellite ou une connexion au câble, pour les diffuser dans le réseau. Il peut également s'agir d'un lecteur de disque optique diffusant dans un réseau domestique des données (audio et/ou vidéo) lues sur un disque optique (le disque contient dans ce cas des données provenant de l'extérieur du réseau).

A l'intérieur du domaine, les contenus numériques peuvent être enregistrés par des dispositifs d'enregistrement numériques, tels un enregistreur DVD (de l'anglais « Digital Versatile Disc » signifiant littéralement « Disque Polyvalent Numérique ») ou un disque dur.

Finalement, le contenu est présenté aux utilisateurs du domaine par des dispositifs de présentation. Ces dispositifs sont adaptés à recevoir les contenus du domaine (notamment les données numériques circulant dans un réseau domestique numérique) pour les traiter (notamment pour les décrypter si nécessaire) et les présenter à l'utilisateur final. Il s'agit notamment de récepteurs de télévision permettant de visualiser des données vidéo ou d'appareils Hi-Fi pour écouter des données audio.

Un dispositif source contient généralement un module dit « d'accès conditionnel » ou un module de gestion des droits numériques (dit « module DRM » pour « Digital Rights Management ») selon que le contenu est respectivement un contenu « diffusé » (« broadcast content » en anglais) ou un contenu « large bande » (« broadband content » en anglais). Ces modules gèrent la protection du contenu mise en place par le fournisseur de contenu.

Par exemple, si l'on considère des programmes télévisés payants, le fournisseur de contenu, c'est à dire le diffuseur de programmes, fournit habituellement les programmes numériques sous une forme embrouillée (c'est à dire cryptée) à l'aide de clés appelées mots de contrôle, les mots de contrôle étant eux-mêmes transmis avec les données sous forme chiffrée dans des messages appelés « ECM » (de l'anglais « Entitlement Control Message » signifiant littéralement « Message de Contrôle des Droits »). Le fournisseur de contenu fournit également aux abonnés ayant payé pour recevoir les programmes la clé permettant de déchiffrer les mots de contrôle et un module d'accès conditionnel contenant, entre autre, l'algorithme de déchiffrement des mots de contrôle (la clé et le module d'accès conditionnel sont préférentiellement inclus dans une carte à puce). C'est aussi le fournisseur de contenu qui définit les règles d'utilisation du contenu fourni, c'est à dire qui définit si le contenu est du type « copie libre », « copie privée » ou « lecture seule ».

Dans le système de protection contre la copie connu sous le nom de *SmartRight*™ (*SmartRight* est une marque déposée de la société THOMSON multimedia), les dispositifs sources transforment les contenus reçus en fonction des règles d'utilisation de ces contenus.

Lorsqu'un contenu reçu par un dispositif source d'un domaine donné est de type « copie privée », le contenu est transformé de manière à ce qu'il ne puisse être décrypté que par des dispositifs de présentation appartenant à ce domaine particulier (et donc partageant tous un même secret). La demande de brevet français No. 01 05568, déposée le 25 avril 2001 au nom du demandeur THOMSON Licensing S.A., concernant un procédé de gestion de clé symétrique dans un réseau de communication, décrit notamment comment cette transformation est effectuée de sorte que seuls les dispositifs de présentation connaissant une clé secrète du réseau de communication sont capables de décrypter le contenu pour le lire.

On notera que, dans la suite de la description, les termes « clé secrète » ou « clé symétrique » seront utilisés pour désigner une clé cryptographique utilisée dans un algorithme de chiffrement ou de déchiffrement symétrique, tel que l'algorithme connu sous le nom de AES (acronyme de « Advanced Encryption Standard ») ou encore sous le nom de « Rijndael » et décrit notamment dans le document « Proceedings from the first Advanced Encryption Standard Candidate Conference, National Institute of Standards and Technology (NIST), août 1998, J. Daemen et V. Rijmen ».

Lorsqu'un contenu reçu par un dispositif source est de type « lecture seule », le contenu est également transformé par ce dispositif source en utilisant le procédé décrit dans la demande de brevet précitée de sorte qu'il ne puisse être lu que par les dispositifs de présentation du réseau qui connaissent la clé secrète du réseau. De plus, un procédé décrit dans la demande de brevet français No. 00 15894, déposée le 7 décembre 2000 au nom de THOMSON multimedia, est mis en oeuvre pour que le contenu ne puisse pas être copié dans le domaine ou qu'en cas de copie, celle-ci ne puisse pas être relue par les dispositifs de présentation du domaine.

Lorsqu'un contenu reçu dans un domaine est de type « copie libre », il est généralement en clair et est laissé sous cette forme par le dispositif source qui a reçu le contenu pour le diffuser dans le domaine.

Grâce à ce système, il est possible à un utilisateur qui reçoit un contenu après avoir payé au fournisseur de ce contenu les droits associés, de garder une copie privée de ce contenu pour son usage personnel ultérieur. Cette copie ne pourra être lue que par des dispositifs de présentation de son domaine, c'est à dire du domaine dans lequel le contenu a été reçu initialement.

Néanmoins, il existe des cas dans lesquels il est souhaitable de pouvoir relire une copie privée effectuée dans un premier domaine sur un dispositif de présentation d'un second domaine. Notamment, si un utilisateur souhaite visualiser sur le domaine d'un ami la copie d'un film effectuée sur son propre domaine, naturellement sans qu'une copie puisse être réalisée pour le domaine de l'ami.

Ceci peut également être nécessaire en cas d'union ou de séparation d'utilisateurs. En cas d'union, si chaque utilisateur avait auparavant son propre domaine, les deux domaines ne pourront être reliés ensemble car les appareils des deux domaines ne partagent pas le même secret. Dans ce cas, si les deux utilisateurs ne veulent pas gérer deux domaines différents, il faudra que les contenus enregistrés au préalable sur un premier domaine puissent être relus sur le deuxième domaine. De même, lorsque l'on souhaite séparer un domaine en deux domaines différents (parce que des époux se séparent ou qu'un enfant quitte le domicile de ses parents), il est nécessaire de pouvoir relire les contenus enregistrés au préalable sur le domaine commun sur les deux nouveaux domaines.

WO 00/62505 décrit un système dans lequel un décodeur raccordé à un réseau reçoit un flux provenant de l'extérieur du réseau. Le flux comprend des données chiffrées avec des mots de contrôle ainsi que les mots de contrôle, eux-mêmes sont chiffrés avec un première clé. Le décodeur renvoie le flux à une carte à puce qui déchiffre les mots de contrôle et les rechiffre ensuite avec une clé propre au réseau avant l'envoi dans le réseau. Cette solution souffre des problèmes mentionnés ci-dessus.

WO 01/55850 décrit un dispositif de chiffrement dans un réseau de communication. Afin de protéger des données, le dispositif transmetteur génère une clé privée symétrique qui est utilisée pour le chiffrement des données. La clé privée symétrique est chiffrée avec la clé publique du récepteur avant l'envoi à celui-ci. Le récepteur utilise sa clé privée pour déchiffrer la clé privée symétrique et peut ensuite déchiffrer les données chiffrées avec cette clé. Cette solution ne marche pas dans un réseau avec plusieurs récepteurs.

La présente invention vise à résoudre les problèmes précités.

Exposé de l'invention

L'invention concerne à cet effet, un procédé de traitement de données, chiffrées selon un procédé de chiffrement propre à un premier domaine de sorte qu'elles ne puissent être déchiffrées qu'à l'aide d'un premier secret propre audit premier domaine, lesdites données étant reçues dans un dispositif de présentation raccordé à un réseau appartenant à un second domaine. Selon l'invention, le procédé comporte les étapes consistant pour le dispositif de présentation à :

(a) transmettre à un dispositif de traitement raccordé au réseau une partie au moins desdites données chiffrées ;

(b) recevoir dudit dispositif de traitement au moins un élément permettant de déchiffrer lesdites données reçues à l'aide d'un second secret propre audit second domaine, ledit second secret étant contenu dans le dispositif de présentation.

Ainsi le déchiffrement des données est délégué à un dispositif de traitement qui connaît le premier secret propre au premier domaine et qui effectue un traitement sur la partie des données qu'il reçoit de sorte que le dispositif de présentation du second domaine puisse déchiffrer les données reçues simplement en connaissant le second secret propre au second domaine.

De plus, comme le secret du premier domaine n'est pas transmis au dispositif de présentation du second domaine, il ne peut déchiffrer les données reçues que lorsque le dispositif de traitement est raccordé au réseau du second domaine.

Selon un mode de réalisation particulier de l'invention, les données reçues dans le dispositif de présentation sont chiffrées à l'aide d'une première clé symétrique, ladite première clé symétrique étant reçue avec les données sous forme chiffrée à l'aide du premier secret. Dans ce mode de réalisation, l'étape (a) consiste à transmettre au dispositif de traitement la première clé symétrique chiffrée à l'aide du premier secret ; et l'étape (b) consiste à recevoir du dispositif de traitement : la première clé symétrique chiffrée à l'aide d'une seconde clé symétrique ; et la seconde clé symétrique chiffrée à l'aide du second secret propre au second domaine.

Selon une caractéristique particulière de l'invention, le procédé comporte en outre les étapes consistant pour le dispositif de présentation à :

(c) déchiffrer, à l'aide du second secret, la seconde clé symétrique chiffrée ;
(d) déchiffrer, à l'aide de la seconde clé symétrique, la première clé symétrique chiffrée ; et
(e) déchiffrer les données reçues par ledit dispositif de présentation à l'aide de la première clé symétrique.

Selon un mode de réalisation particulier de l'invention, le procédé comporte en outre, avant l'étape (a), une étape consistant pour le dispositif de présentation à générer un nombre aléatoire, le nombre aléatoire étant transmis au dispositif de traitement, à l'étape (a), avec le chiffrement de la première clé symétrique. Dans ce mode de réalisation les données reçues à l'étape (b) contiennent un nombre aléatoire et la première clé symétrique chiffrés à l'aide de la seconde clé symétrique; l'étape (d) comprend également le déchiffrement, à l'aide de la seconde symétrique, du nombre aléatoire chiffré reçus à l'étape (b) ; et le procédé comporte en outre, avant l'étape (e), une étape de vérification que le nombre aléatoire déchiffré à l'étape (d) est identique au nombre aléatoire généré avant l'étape (a) ; l'étape (e) n'étant effectuée qu'en cas de vérification positive.

Selon une autre caractéristique de l'invention, un identifiant de domaine est contenu dans les données reçues par le dispositif de présentation ; l'identifiant de domaine est transmis au dispositif de traitement lors de l'étape (a) ; et l'étape (b) n'est effectuée que si le dispositif de traitement contient le même identifiant de domaine.

Brève description des dessins

D'autres caractéristiques et avantages de l'invention apparaîtront à travers la description de modes de réalisation particuliers non limitatifs, explicités à l'aide des figures jointes, parmi lesquelles :

- la figure 1 est un schéma bloc d'un réseau domestique numérique raccordant entre eux des dispositifs appartenant à un premier domaine ;
- la figure 2 est un schéma bloc d'un réseau domestique comportant des dispositifs appartenant à un second domaine illustrant un mode de réalisation de l'invention ;
- la figure 3 est un diagramme temporel illustrant des échanges de clés entre deux dispositifs du réseau domestique de la figure 2 ;
- la figure 4 est un diagramme temporel illustrant les échanges de données entre des dispositifs du réseau domestique de la figure 2 permettant de lire (sans le copier) dans le second domaine, un contenu enregistré dans le premier domaine.

Description détaillée de modes de réalisation de l'invention

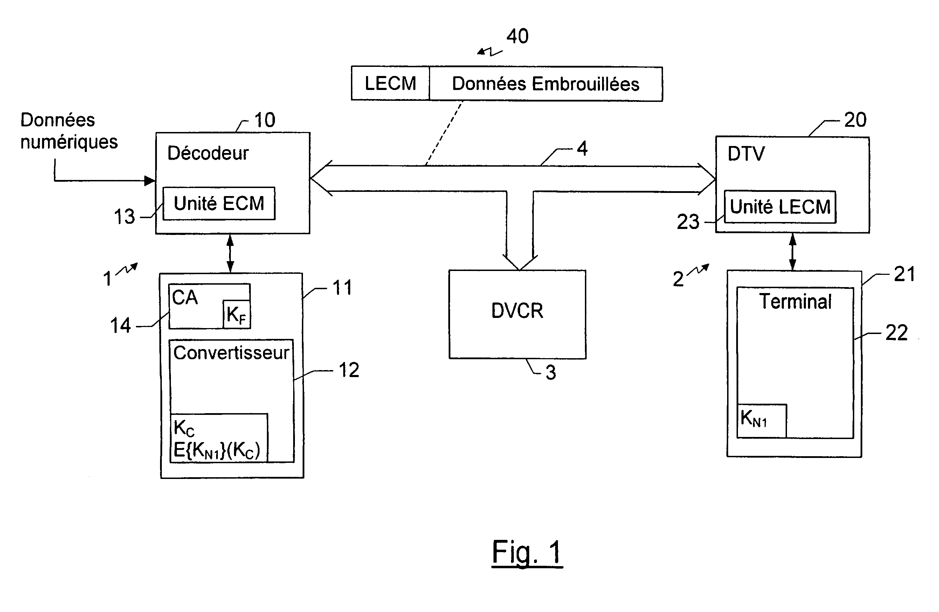

Nous décrirons dans un premier temps, en liaison avec la figure 1, un exemple de réseau domestique dans lequel est mis en oeuvre un système de protection contre la copie permettant d'effectuer des copies privées des contenus numériques, pour un usage futur uniquement dans le réseau domestique dans lequel ils ont été copiés.

Le réseau comprend un dispositif source 1, un dispositif de présentation 2 et un dispositif d'enregistrement 3 reliés ensembles par un bus numérique 4, qui est par exemple un bus selon la norme IEEE 1394.

Le dispositif source 1 comprend un décodeur numérique 10 doté d'un lecteur de carte à puce muni d'une carte à puce 11. Ce décodeur reçoit des données numériques, notamment des programmes audio/vidéo distribués par un prestataire de service.

Le dispositif de présentation 2 comprend un récepteur de télévision numérique (DTV) 20 doté d'un lecteur de carte à puce muni d'une carte à puce 21 et le dispositif d'enregistrement 3 est notamment un magnétoscope numérique (DVCR).

Les données numériques qui entrent sur le réseau via le dispositif source 1 sont en général des données embrouillées par un fournisseur de contenu, par exemple selon le principe de la télévision payante. Dans ce cas, les données sont embrouillées à l'aide de mots de contrôle CW (de l'anglais « Control Word ») qui sont eux-même transmis dans le flux de données sous forme chiffrée à l'aide d'une clé de chiffrement $K_F$ en étant contenus dans des messages de contrôle ECM (de l'anglais « Entitlement Control Message »). La clé de chiffrement $K_F$ est mise à la disposition des utilisateurs qui ont payé pour recevoir les données, notamment en étant stockée dans une carte à puce. Dans l'exemple de la figure 1, la carte à puce 11 contient une telle clé $K_F$ ainsi qu'un module d'accès conditionnel CA 14 capable de déchiffrer les mots de contrôle CW.

Le dispositif source 1 qui reçoit ces données numériques embrouillées les met ensuite en forme pour qu'elles soient diffusées sur le réseau numérique selon un format de protection spécifique au réseau domestique. Le décodeur 10 comporte un module « unité ECM » 13 qui extrait du flux de données reçu les messages ECM contenant les mots de contrôle chiffrés à l'aide de la clé $K_F$ pour les transmettre au module CA 14. Celui-ci déchiffre les mots de contrôle CW et les transmet à un module convertisseur 12 également contenu dans la carte à puce 11.

Le rôle du module convertisseur 12 est de transformer les informations contenues dans les messages ECM en messages LECM (de l'anglais « Local Entitlement Control Message ») protégés à l'aide d'une clé secrète spécifique au réseau domestique local, que l'on appellera la clé $K_{N1}$.

On suppose qu'auparavant le module convertisseur a généré aléatoirement une clé symétrique $K_C$ et a requis le chiffrement de cette clé $K_C$ à l'aide de la clé secrète du réseau $K_{N1}$. Le module convertisseur possède donc en mémoire la clé $K_C$ et la clé $K_C$ chiffrée par la clé secrète du réseau $K_{N1}$ : $E\{K_{N1}\}(K_C)$.

Dans le reste de la description, on utilisera toujours la notation $E\{K\}(M)$ pour signifier chiffrement avec une clé K des données M.

La demande de brevet français No. 01 05568 précitée décrit en détail le procédé qui permet au module convertisseur d'obtenir le chiffrement de la clé $K_C$ à l'aide de la clé secrète du réseau $K_{N1}$, ce chiffrement étant effectué dans un dispositif de présentation. En effet, les dispositifs de présentation du réseau, tels que le dispositif 2 de la figure 1, sont les seuls à posséder la clé secrète du réseau $K_{N1}$. Celle-ci est contenue dans la carte à puce 21 avec un module terminal 22 chargé, entre autre, des opérations de chiffrement et déchiffrement avec la clé du réseau $K_{N1}$.

Le fonctionnement du système est le suivant. Lorsque des données numériques sont reçues dans le décodeur 10, le module « unité ECM » 13 extrait les messages ECM contenant les mots de contrôle CW chiffrés à l'aide de la clé $K_F$ spécifique au fournisseur de contenu et les fournit au module CA 14. Ce dernier déchiffre les mots de contrôle CW et les transmet au module convertisseur 12. De plus, le message ECM peut également contenir des informations de contrôle de la copie du contenu transmis indiquant si le contenu peut être copié librement ou non dans le réseau ou bien si le contenu peut seulement être visualisé (ou écouté...) dans le réseau. Ces informations sont également transmises au module convertisseur.

Le module convertisseur construit ensuite un message LECM à partir de ces données. Ce message comprend préférentiellement :

- une partie A en clair contenant notamment les informations de contrôle de la copie du contenu, c'est à dire indiquant si le contenu est de type « copie libre », « copie privée » ou bien « lecture seule » ; ces informations sont souvent notées VCI (acronyme de l'anglais « Viewing Control Information »). La partie en clair contient également la clé $K_C$ chiffrée avec la clé du réseau : $E\{K_{N1}\}(K_C)$.

- une partie B, chiffrée avec la clé $K_C$, et contenant essentiellement le mot de contrôle déchiffré CW ; on peut résumer cette partie à : $E\{K_C\}(CW)$.

- un champ d'intégrité formé par le résultat d'une fonction de hachage appliquée à l'ensemble des parties A et B avant chiffrement de la partie B. Ce champ d'intégrité permet avantageusement de vérifier la validité des messages LECM et permet de s'assurer qu'ils ne sont pas modifiés illicitement.

Le message LECM est ensuite transmis à l'unité ECM qui l'insère dans le flux de données à la place des messages ECM. Il est à noter que lorsque le contenu reçu n'est pas déjà sous forme embrouillée comme décrit ci-dessus et ne contient pas de message ECM, le module convertisseur 12 est chargé dans ce cas de mettre les données sous cette forme pour que le flux de données diffusé sur le réseau 4 soit toujours sous la forme de paquets de données tels le paquet 40 représenté à la figure 1 contenant un message LECM et des données embrouillées.

On peut résumer le contenu de ce paquet comme suit :

LECM |E{CW}(<données>) ; soit :

E{K_{N1}}(K_C)|VCI|E{K_C}(CW)|Champ d'intégrité |E{CW}(<données>) ;

où « | » représente l'opérateur de concaténation.

Lorsque ces paquets de données sont reçus par le récepteur de télévision numérique 20, ils sont transmis au module « Unité LECM » 23 qui en extrait les messages LECM pour les transmettre au module terminal 22. Ce dernier déchiffre tout d'abord $E\{K_{N1}\}(K_C)$ à l'aide de la clé $K_{N1}$ pour obtenir la clé $K_C$. Ensuite, à l'aide de la clé $K_C$, il déchiffre $E\{K_C\}(CW)$ pour obtenir le mot de contrôle CW qu'il transmet au module « Unité LECM » 23. Celui-ci est alors en mesure de désembrouiller les données $E\{CW\}(<\text{données}>)$ à l'aide du mot de contrôle. Les données désembrouillées sont ensuite présentées à l'utilisateur. Dans le cas de données vidéo, celles-ci peuvent être visualisées sur le récepteur de télévision 20.

Si le flux de données contenant les paquets 40 est enregistré par le magnétoscope numérique 3 pour être relu plus tard, nous constatons que ceci n'est possible que si le dispositif de présentation sur lequel les données doivent être présentées contient la clé secrète $K_{N1}$ du domaine dans lequel les données ont été enregistrées. Nous appellerons dans la suite ce domaine N1.

Rappelons que nous entendons par domaine, dans l'exemple de la figure 1, le réseau domestique numérique ainsi que l'ensemble des appareils qui y sont connectés ainsi également que des appareils de présentation portables (non représentés) qui sont susceptibles d'être raccordés au réseau domestique et qui appartiennent aux membres de la famille possédant le réseau domestique. Les appareils de présentation portables (par exemple des lecteurs de fichiers musicaux compressés) sont considérés comme faisant partie du domaine N1 lorsqu'ils contiennent la clé secrète $K_{N1}$. On pourra se reporter à la demande de brevet français No. 01 05568 précitée pour y trouver une description de la manière dont la clé secrète du domaine N1 est transmise aux nouveaux dispositifs de présentation qui « entrent » dans le domaine (par exemple lorsqu'un membre de la famille achète un nouvel appareil).

Supposons maintenant qu'un utilisateur ayant enregistré un contenu (par exemple un film) de type « copie privée » sur son domaine N1 souhaite pouvoir le visualiser sur un récepteur de télévision appartenant à un autre domaine que nous noterons N2.

Dans ce cas, l'utilisateur insérera par exemple une cassette contenant le film dans un magnétoscope numérique du domaine N2. Ce magnétoscope diffusera le film sur le réseau domestique du domaine N2 pour qu'il soit visualisé sur un récepteur de télévision du domaine N2. Mais comme ce dernier ne connaît pas la clé secrète du domaine N1, $K_{N1}$, il ne pourra déchiffrer le contenu des messages LECM et donc ne pourra pas désembrouiller les données pour présenter le film à l'utilisateur.

Nous allons maintenant décrire comment, grâce à l'invention, il sera possible de visualiser dans le domaine N2 le contenu enregistré comme « copie privée » dans le domaine N1 sans pour autant qu'il soit possible de réaliser une copie de ce contenu pour le domaine N2, ou du moins de manière à ce qu'en cas de copie dans le domaine N2, cette copie ne puisse pas être relue dans le domaine N2.

Pour cela, il est prévu un module spécial réunissant les fonctionnalités d'un module convertisseur et d'un module terminal et inclus préférentiellement dans une carte à puce. Nous parlerons dans la suite soit du module terminal/ convertisseur, soit de la carte terminal/convertisseur.

Ce module devra d'abord être initialisé dans le domaine N1 pour recevoir le secret du domaine N1, à savoir la clé $K_{N1}$, puis il sera raccordé au domaine N2 pour réaliser le déchiffrement des parties chiffrées avec la clé $K_{N1}$ des paquets de données formant le contenu.

Nous décrirons ci-dessous plus en détails comment ces étapes sont réalisées.

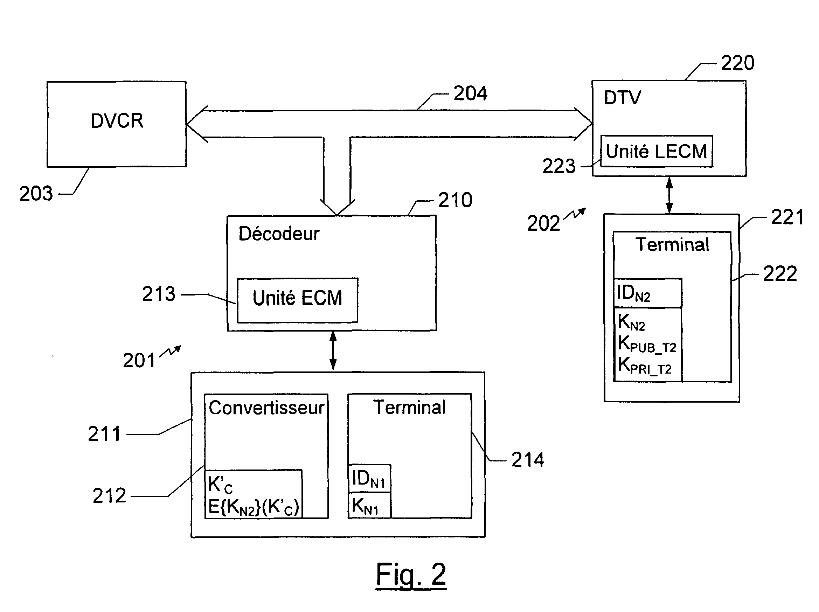

Sur la figure 2, nous avons représenté schématiquement le réseau domestique numérique d'un domaine N2 dans lequel est mis en oeuvre le mode de réalisation préféré de l'invention. Nous n'avons représenté que les éléments nécessaires à la compréhension de l'invention.

Dans ce réseau, un bus numérique 204 relie entre eux un magnétoscope numérique 203, un dispositif de présentation 202 et un dispositif source 201. Le bus numérique 204 est préférentiellement un bus selon la norme IEEE 1394. Le dispositif de présentation 202 comprend un récepteur de télévision numérique DTV 220 qui comporte un module « Unité LECM » 223 et une carte à puce 221 comprenant un module terminal 222. Dans la carte à puce 221 est mémorisée la clé secrète du domaine N2 : $K_{N2}$.

Le dispositif source 201 comprend un décodeur numérique 210 qui comporte un module « Unité ECM » 213. Dans le décodeur 210 se trouve insérée une carte terminal/convertisseur 211 qui comprend un module terminal 214 et un module convertisseur 212. Cette carte 211 est insérée à la place d'une carte « convertisseur », c'est à dire d'une carte à puce contenant un module convertisseur telle la carte 11 de la figure 1, dans le dispositif source 201.

En pratique, la carte terminal/convertisseur 211 appartient à l'utilisateur du domaine N1 et celui-ci l'insère dans un dispositif source (ou bien dans un dispositif de présentation comme on le verra dans un second mode de réalisation) du domaine N2 lorsqu'il souhaite visualiser dans le domaine N2 un contenu enregistré comme « copie privée » dans le domaine N1.

Le module terminal 214 contient la clé sécrète du domaine N1 qu'il a reçu lors d'une phase d'initialisation de la carte terminal/convertisseur 211 dans le domaine N1.

En effet, avant d'être raccordée au réseau du domaine N2, la carte terminal/convertisseur 211 a été au préalable raccordée au réseau du domaine N1 en étant insérée dans un dispositif de présentation de N1 à la place de la carte « terminal » (une carte à puce contenant un module terminal telle la carte 21 de la figure 1) qui s'y trouve habituellement. Le module terminal 214 était alors considéré comme « vierge », c'est à dire n'appartenant à aucun domaine.

Le module terminal 214 a ensuite reçu du dispositif « géniteur » du domaine N1 la clé secrète $K_{N1}$ avant de devenir « stérile ».

Les termes « vierge », « géniteur » et « stérile » sont définis dans la demande de brevet français No. 01 05568 précitée et désignent respectivement un dispositif de présentation (ou plus précisément son module terminal) :

- qui n'est raccordé à aucun domaine et ne contient aucune clé secrète de domaine (dispositif ou module terminal « vierge ») ;
- qui possède la clé secrète d'un domaine et peut la transmettre à un nouveau dispositif de présentation vierge susceptible d'être raccordé au domaine (dispositif ou module terminal « géniteur ») ; et
- qui possède la clé secrète d'un domaine mais ne peut pas la transmettre à un autre dispositif (dispositif ou module terminal « stérile »).

La demande de brevet précitée décrit également les mécanismes de transmission sécurisée de la clé secrète entre les différents dispositifs.

Après cette phase d'initialisation dans le domaine N1, la carte terminal/convertisseur 211 est donc raccordée à un domaine N2 dans lequel on souhaite visualiser un contenu enregistré comme « copie privée » dans le domaine N1. Sur la figure 2, elle est insérée dans le décodeur numérique 210 du dispositif source 201.

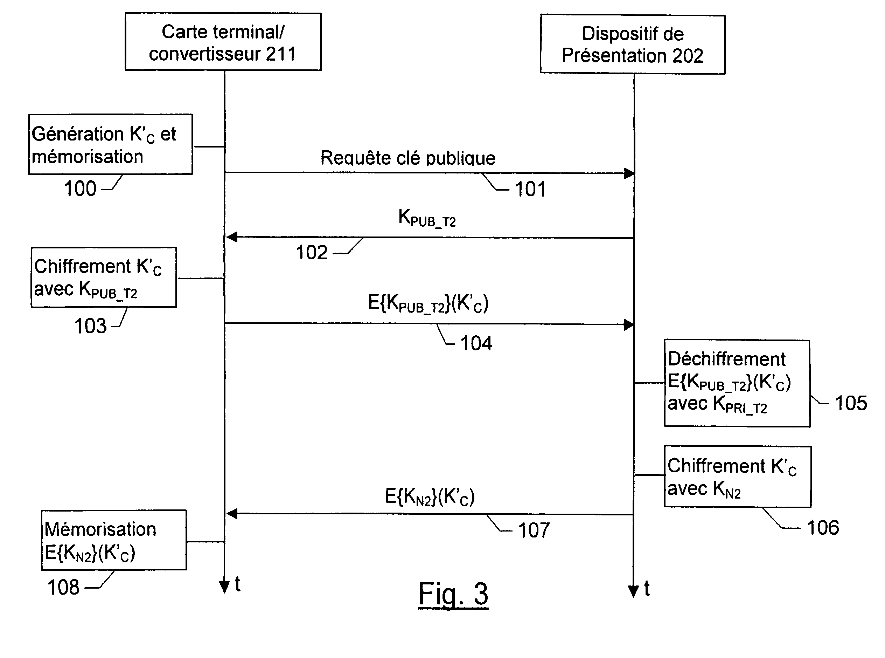

La figure 3 illustre les étapes qui sont mises en oeuvre après que la carte terminal/convertisseur 211 a été raccordée au réseau du domaine N2.

Lors d'une première étape 100, une clé symétrique $K'_C$ est générée aléatoirement par le module convertisseur 212 de la carte terminal/convertisseur 211 et est mémorisée dans la carte 211.

Lors de l'étape suivante 101, le dispositif source 201 diffuse sur le réseau du domaine N2 un message de requête pour recevoir une clé publique d'un dispositif de présentation du réseau. Chaque dispositif de présentation possède en effet une paire de clés asymétriques mémorisée dans la carte à puce qui contient le module terminal. Par exemple, le dispositif de présentation 202 de la figure 2 possède une clé publique $K_{PUB\_T2}$ et une clé privée $K_{PRI\_T2}$. Ces clés sont utilisées de manière connue en soi pour réaliser des opérations de chiffrement ou de déchiffrement à l'aide d'algorithmes cryptographiques asymétriques (par exemple l'algorithme RSA, du nom de ses créateurs Rivest, Shamir et Adleman).

N'importe quel dispositif de présentation du domaine N2 peut répondre à cette requête 101. On suppose dans la suite que le dispositif de présentation 202 répond à la requête en envoyant sa clé publique $K_{PUB\_T2}$ au dispositif source 201 lors de l'étape 102.

Le module convertisseur 212 réalise alors le chiffrement de la clé symétrique $K'_C$ à l'aide de la clé publique $K_{PUB\_T2}$ reçue (étape 103) puis il envoie le résultat de ce chiffrement $E\{K_{PUB\_T2}\}(K'_C)$ au dispositif de présentation 202 (étape 104). Ce dernier déchiffre le résultat reçu à l'aide de sa clé privée $K_{PRI\_T2}$ pour obtenir $K'_C$ (étape 105). Il procède ensuite (étape 106) au chiffrement de $K'_C$ avec la clé secrète du domaine N2, $K_{N2}$, pour obtenir $E\{K_{N2}\}(K'_C)$, résultat qu'il envoie au dispositif source 201 à l'étape 107. Ce résultat $E\{K_{N2}\}(K'_C)$ est mémorisé dans la carte terminal/convertisseur 211 à l'étape suivante 108.

La carte terminal/convertisseur est maintenant prête à effectuer le déchiffrement du contenu de type « copie privée » du domaine N1 pour le domaine N2.

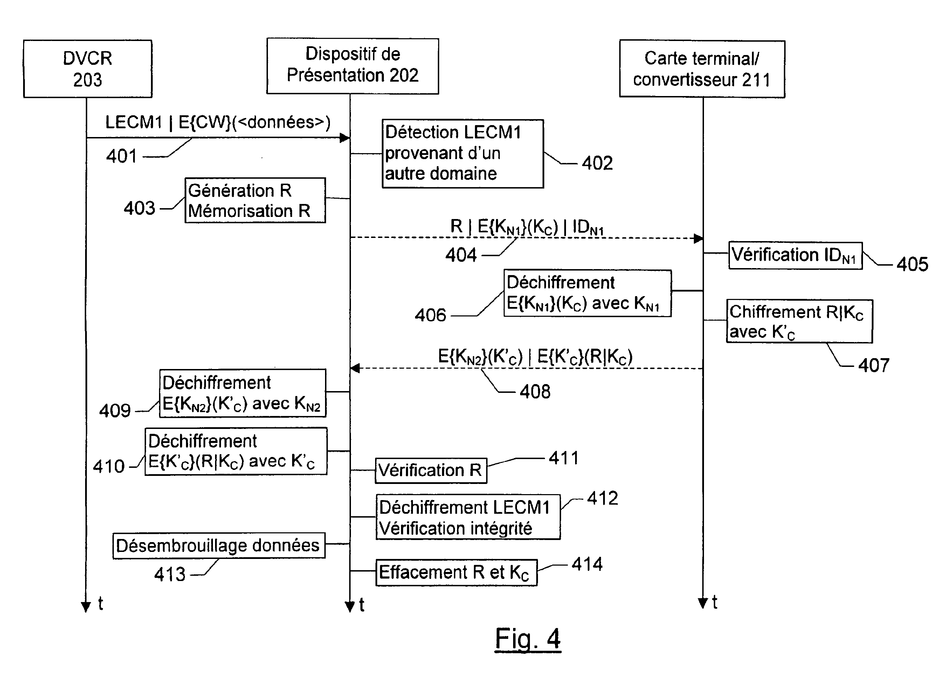

Nous allons maintenant décrire, en liaison avec la figure 4, le procédé mis en oeuvre pour cela.

Sur la figure. 4, on a représenté par trois axes verticaux descendants t l'axe du temps pour illustrer les traitements effectués par le magnétoscope numérique DVCR 203, le dispositif de présentation 202 et la carte terminal/convertisseur 211 ainsi que les échanges entre ces éléments lorsqu'un nouveau contenu provenant du domaine N1 est diffusé sur le réseau domestique numérique du domaine N2.

Dans un premier temps, l'utilisateur insère par exemple la cassette vidéo contenant le programme vidéo enregistré dans le domaine N1, dans le magnétoscope numérique 203 du domaine N2. Le magnétoscope diffuse alors classiquement sur le réseau du domaine N2 les données enregistrées sur la cassette.

Nous supposons que l'utilisateur souhaite visualiser le contenu sur le dispositif de présentation 202. Il règlera donc ce dispositif sur le canal de diffusion du magnétoscope numérique 203 pour recevoir les données.

Ces données diffusées à l'étape 401 de la figure 4 contiennent des paquets de données tels que le paquet suivant :

$$\text{LECM1} \mid \text{E\{CW\}(<données>)},$$

soit

$$\text{E\{K}_{N1}\}(\text{K}_C) \mid \text{E\{K}_C\}(\text{CW}) \mid \text{Champ d'intégrité} \mid \text{E\{CW\}(<données>)},$$

où

le Champ d'intégrité est calculé comme suit :

$$\text{Hash} \ (\text{E\{K}_{N1}\}(\text{K}_C) \mid \text{CW}),$$

avec « Hash (x) » qui représente une fonction de hachage, c'est à dire une fonction mathématique qui transforme un ensemble de données d'entrée « x » en un ensemble de données « y » de taille fixe, souvent inférieure à la taille des données d'entrée, et représentatives des données d'entrées ; cette fonction est de plus une fonction à sens unique (« one way function » en anglais) c'est à dire que, connaissant « y », il est impossible de retrouver « x » tel que y= Hash (x). Préférentiellement, nous utilisons la fonction SHA-1 décrite dans le document « Secure Hash Standard, FIPS PUB 180-1, National Institute of Standard Technology, 1995 ».

Lorsqu'un tel paquet de données est reçu dans le dispositif de présentation 202, le module « Unité LECM » 223 extrait le message LECM1 du paquet de données et le transmet au module terminal 222.

Celui-ci va tout d'abord détecter à l'étape 402 que ce message LECM1 provient d'un domaine différent du domaine N2.

Pour cela, selon une première variante de réalisation préférée, le message LECM1 contient en outre dans sa partie en clair, c'est à dire dans sa partie qui n'est pas chiffrée par la clé $K_C$, un identifiant de domaine $ID_{N1}$. Cet identifiant identifie de manière unique le domaine N1 et est par exemple le résultat d'une fonction de hachage appliquée à la clé secrète du domaine N1, $K_{N1}$. L'identifiant $ID_{N1}$ est contenu dans toute carte terminal d'un dispositif de présentation du domaine N1. Il est également contenu dans ce cas dans la carte terminal/convertisseur 211.

La carte terminal 221 du dispositif de présentation 202 contient aussi, en plus de la clé secrète du domaine N2, un identifiant du domaine N2 : $ID_{N2}$. Le module terminal 222 compare donc l'identifiant $ID_{N1}$ contenu dans le message LECM1 avec l'identifiant contenu dans la carte terminal/convertisseur $ID_{N2}$. Lorsque les deux identifiants sont différents, le module terminal 222 en déduit que le message LECM1 reçu provient d'un domaine différent du domaine N2.

Selon une deuxième variante de réalisation, le message LECM1 ne contient pas d'identifiant de domaine. Le module terminal 222 utilisera dans ce cas le Champ d'intégrité du message LECM1 pour vérifier si ce message provient du domaine N2 ou non.

En effet, si le module terminal 222 déchiffre le message LECM1 avec la clé $K_{N2}$ et applique la fonction de hachage « Hash(x) » précitée aux données déchiffrées, le résultat obtenu sera différent du Champ d'intégrité du message LECM1 et le module terminal en déduira que le message LECM1 provient d'un domaine différent de N2.

A l'étape suivante 403, le module terminal 222 génère un nombre aléatoire R. Ce nombre est préférentiellement généré par un générateur de nombres pseudo-aléatoires bien connu en soi. Le nombre R est un challenge utilisé pour prévenir les « replay attacks » (attaques consistant à rejouer des messages enregistrés). Le nombre R est mémorisé temporairement à l'étape 403 dans une zone de mémoire sécurisée de la carte 221.

Le dispositif de présentation 202 diffuse ensuite sur le réseau, à l'étape 404, un message contenant les données suivantes :

$$\text{R} \mid \text{E\{K}_{N1}\}(\text{K}_C) \mid \text{ID}_{N1}$$

L'identifiant $ID_{N1}$ n'est inclus dans ce message que dans la première variante de réalisation décrite ci-dessus.

Cette diffusion est effectuée en utilisant le canal asynchrone du bus 204 par lequel transitent habituellement les messages de commande (l'envoi par le canal asynchrone du bus 204 est représenté par une flèche en pointillés à la figure 4).

Le dispositif source 201 qui reçoit ce message le transmet à la carte terminal/convertisseur 211.

L'étape suivante 405 n'a lieu que dans le cadre de la première variante de réalisation précitée et consiste à vérifier que l'identifiant inclus dans le message reçu à l'étape 404 est identique à celui contenu dans la carte terminal/convertisseur 211. Si les deux identifiants ne sont pas identiques, alors le procédé s'arrête car la carte terminal/convertisseur 211 n'est pas en mesure de déchiffrer l'information $E\{K_{N1}\}(K_C)$. Si les identifiants sont identiques, par contre, le procédé se poursuit par l'étape 406 lors de laquelle la carte terminal/convertisseur déchiffre $E\{K_{N1}\}(K_C)$ à l'aide de la clé $K_{N1}$ pour obtenir la clé Kc.

Dans le cas où la seconde variante de réalisation est utilisée, l'étape 405 n'a pas lieu et toute carte terminal/convertisseur raccordée au réseau du domaine N2 effectuera l'étape 406 et les suivantes 407 et 408.

A l'étape 407, la carte terminal/convertisseur chiffre les données R et $K_C$ avec la clé $K'_C$ puis elle construit le message suivant :

$$E\{K_{N2}\}(K'_C) \mid E\{K'_C\}(R\mid K_C)$$

qu'elle transmet au dispositif de présentation 202, toujours via le canal asynchrone du bus 204, à l'étape 408.

A l'étape 409, le module terminal 222 déchiffre $E\{K_{N2}\}(K'_C)$ avec la clé $K_{N2}$ pour obtenir la clé $K'_C$ avec laquelle il déchiffre $E\{K'_C\}(R\mid K_C)$ pour obtenir $R\mid K_C$ à l'étape suivante 410.

Ensuite, à l'étape 411, le module terminal 222 vérifie que le nombre R retrouvé à l'étape 410 est bien le même que celui qui a été généré et mémorisé à l'étape 403. Si ce n'est pas le cas, le procédé s'arrête car cela signifie que le message reçu à l'étape 408 n'est pas valide.

Si la vérification est positive, le procédé se poursuit à l'étape 412 par le déchiffrement du message LECM1 à l'aide de la clé $K_C$ obtenue à l'étape 410. Plus précisément, l'information $E\{K_C\}(CW)$ est déchiffrée pour obtenir le mot de contrôle en clair CW.

Le module terminal 222 vérifie également à l'étape 412 l'intégrité du message LECM1 en calculant :

Hash $(E\{K_{N1}\}(K_C)\mid CW)$ à partir des données déchiffrées ci-dessus et en comparant ce résultat au Champ d'intégrité du message LECM1.

Lorsque la deuxième variante de réalisation mentionnée ci-dessus est mise en oeuvre, le dispositif de présentation 202 peut éventuellement recevoir plusieurs messages du type de celui envoyé à l'étape 408 si plusieurs cartes terminal/convertisseur sont raccordées au réseau du domaine N2. Dans ce cas, le module terminal 222 effectue les étapes 409 à 412 pour chaque message reçu à l'étape 408 et lorsque la vérification de l'intégrité du message LECM1 est correcte, le module terminal en déduit que le message reçu à l'étape 408 est celui issu de la carte terminal/convertisseur provenant du domaine N1.

Si la vérification d'intégrité échoue dans tous les cas, alors le procédé est arrêté. On peut prévoir dans ce cas d'afficher un message d'avertissement à destination de l'utilisateur.

Sinon, le module terminal 222 transmet le mot de contrôle CW déchiffré au module « Unité LECM » du récepteur de télévision 220 et celui-ci peut ainsi désembrouiller, à l'étape 413, les données du paquet de données reçu à l'étape 401.

Le dispositif de présentation 202 est aussi capable, grâce à la clé $K_C$ qu'il mémorise temporairement, de déchiffrer les paquets de données suivants du contenu diffusé par le magnétoscope numérique 203 tant que les messages LECM1 de ces paquets sont protégés par la même clé $K_C$. Si jamais la clé $K_C$ change alors les étapes 403 à 412 sont répétées pour que le dispositif de présentation 202 reçoive la nouvelle clé $K_C$ de la carte terminal/convertisseur 211.

Ensuite, lorsque l'ensemble des paquets de données formant le contenu ont été reçus et déchiffrés par le dispositif de présentation 202, ce dernier efface de sa mémoire à l'étape 414 le nombre R et la clé $K_C$ qu'il avait mémorisés temporairement pour effectuer les calculs ci-dessus.

A la figure 2, nous avons illustré un mode de réalisation dans lequel la carte terminal/convertisseur 211 est insérée dans un dispositif source du domaine N2, à la place de la carte convertisseur qui s'y trouve normalement.

Mais il est également possible, dans un second mode de réalisation, d'insérer la carte terminal/convertisseur dans un dispositif de présentation du domaine N2, à la place de la carte terminal qui s'y trouve habituellement. Le procédé fonctionnera de la même manière que ce qui a été décrit en liaison avec les figures 3 et 4. Cependant, dans ce cas, il est nécessaire naturellement que le domaine N2 comprenne au moins deux dispositifs de présentation de manière à ce qu'au moins un des dispositifs puisse conserver sa carte terminal contenant la clé $K_{N2}$ du domaine pour mettre en oeuvre les étapes qui sont illustrées aux figures 3 et 4.

L'invention ne se limite pas aux exemples de réalisation qui viennent d'être décrits. En particulier, elle s'applique également aux réseaux domestiques numériques dans lesquels les données (notamment les messages LECM) sont protégées à l'aide d'une paire de clés asymétriques spécifique au domaine auquel appartient le réseau, la clé publique du réseau étant contenue dans les dispositifs sources pour chiffrer les données et la clé privée étant contenue dans les dispositifs de présentation pour déchiffrer les données. Dans ce cas, la carte terminal/convertisseur doit contenir, après la phase d'initialisation, la clé privée du premier domaine N1 et la clé publique du second domaine N2 pour être en mesure de déchiffrer les données chiffrées pour le premier domaine et de les re-chiffrer de manière à ce qu'elles soient déchiffrables par un dispositif de présentation du second domaine.

De même, l'invention s'applique aussi dans un autre cas particulier où des données numériques, protégées par un système d'accès conditionnel d'un fournisseur de contenu, sont reçues dans un domaine donné N2 et sont directement enregistrées dans un dispositif d'enregistrement du domaine N2 sans avoir été au préalable « converties » par un module convertisseur du domaine N2 pour être relues dans le domaine N2. Lorsque ces données enregistrées sont ultérieurement reçues par un dispositif de présentation du domaine N2 pour être présentées à un utilisateur, ce dispositif de présentation n'est pas capable de déchiffrer les ECM contenant les mots de contrôle CW protégés par un secret propre au fournisseur de contenu (typiquement, la clé $K_F$ apparaissant à la figure 1 dans le module CA 14). On considère dans ce cas que le « premier domaine » au sens de la présente invention est celui du fournisseur de contenu. Le dispositif de présentation diffuse alors sur le réseau du domaine N2 les messages ECM pour que ceux-ci soient convertis par un module convertisseur du domaine N2 (associé à un module d'accès conditionnel du fournisseur de contenu) en messages LECM déchiffrables à l'aide du secret du domaine N2.

## Revendications

1. Procédé de traitement de données (LECM1) comprenant lesdits des données audio-visuelles chiffrées avec au moins un mot de contrôle (CW), lesdits mots de contrôle chiffrés avec une première clé symétrique ($K_c$) et la première clé symétrique ($K_c$) chiffrée selon un procédé de chiffrement propre à un premier domaine de sorte qu'elle ne puisse être déchiffrée qu'à l'aide d'un premier secret ($K_{N1}$) propre audit premier domaine, lesdites données étant reçues dans un dispositif de présentation (202) raccordé à un réseau appartenant à un second domaine, **caractérisé en ce qu'**il comporte les étapes consistant pour le dispositif de présentation à :

   (a) transmettre (404) à un dispositif de traitement (211) raccordé au réseau la première clé symétrique ($K_c$) chiffrée à l'aide du premier secret ($K_{N1}$) ($E\{K_{N1}\}(K_C)$);
   (b) recevoir (408) dudit dispositif de traitement (211) ladite première clé symétrique chiffrée ($E\{K'_C\}(K_C)$) à l'aide d'une seconde clé symétrique ($K'_C$) et la seconde clé symétrique chiffrée ($E\{K_{N2}\}(K'_C)$) à l'aide du second secret ($K_{N2}$) propre au second domaine, ledit second secret étant contenu dans le dispositif de présentation.

2. Procédé selon la revendication 1, **caractérisé en ce qu'**il comporte en outre les étapes consistant pour le dispositif de présentation à :

   (c) déchiffrer (409), à l'aide du second secret ($K_{N2}$), la seconde clé symétrique ($K'_C$) chiffrée ;
   (d) déchiffrer (410), à l'aide de la seconde clé symétrique ($K'_C$), la première clé symétrique ($K_C$) chiffrée ; et
   (e) déchiffrer lesdits mots de contrôle (CW) par ledit dispositif de présentation à l'aide de la première clé symétrique ($K_C$).

3. Procédé selon la revendication 2, **caractérisé en ce qu'**il comporte en outre, avant l'étape (a), une étape (403) consistant pour le dispositif de présentation à générer un nombre aléatoire (R), ledit nombre aléatoire (R) étant transmis au dispositif de traitement, à l'étape (a), avec le chiffrement ($E\{K_{N1}\}(K_C)$) de la première clé symétrique ; et **en ce que** les données reçues à l'étape (b) contiennent un nombre aléatoire (R) et la première clé symétrique ($K_C$) chiffrés ($E\{K'_C\}(R|K_C)$) à l'aide de la seconde clé symétrique ($K'_C$) ; l'étape (d) comprenant également le déchiffrement, à l'aide de la seconde symétrique ($K'_C$), du nombre aléatoire (R) chiffré reçus à l'étape (b) ; et le procédé comportant en outre, avant l'étape (e), une étape de vérification (411) que le nombre aléatoire (R) déchiffré à l'étape (d) est identique au nombre aléatoire (R) généré avant l'étape (a) ; l'étape (e) n'étant effectuée qu'en cas de vérification positive.

4. Procédé selon l'une des revendications précédentes, **caractérisé en ce qu'**un identifiant de domaine ($ID_{N1}$) est contenu dans les données (LECM1) reçues par le dispositif de présentation (202) et **en ce que** ledit identifiant de domaine est transmis au dispositif de traitement (211) lors de l'étape (a) ; l'étape (b) n'étant effectuée que si ledit dispositif de traitement contient le même identifiant de domaine.

## Claims

1. A method of processing data (LECM1) comprising audio-visual data encrypted with at least one control word (CW), said control words encrypted using a first symmetric key ($K_c$) and the first symmetric key ($K_c$) encrypted according to an encryption method specific to a first domain so that it cannot be decrypted other than with the aid of a first secret specific to said first domain, said data being received in a presentation device (202) connected to a network belonging to a second domain, **characterised in that** it comprises the steps at the presentation device of:

(a) transmitting (404) to a processing device (211) connected to the network the first symmetric key encrypted with the aid of the first secret ($K_{N1}$)($E\{K_{N1}\}(K_C)$),

(b) receiving (408) from said processing device (211) said first symmetric key encrypted ($E\{K'_C\}(K_C)$) with the aid of a second symmetric key ($K'_C$) and the second symmetric key encrypted ($E\{K_{N2}\}(K'_C)$) with the aid of a second secret ($K_{N2}$) specific to the second domain, said second secret being contained in the presentation device.

2. The method as claimed in claim 1, **characterised in that** it also comprises the steps consisting, for the presentation device, of:

(c) decrypting (409), with the aid of the second secret ($K_{N2}$), the second encrypted symmetric key ($K'c$);

(d) decrypting (410), with the aid of the second symmetric key ($K'c$), the first encrypted symmetric key ($Kc$); and

(e) decrypting said control words (CW) received by said presentation device with the aid of the first symmetric key ($Kc$).

3. The method as claimed in claim 2, **characterised in that** it also comprises, before step (a), a step (403) consisting, for the presentation device, in generating a random number (R),

said random number (R) being transmitted to the processing device, in step (a), with the encryption ($E\{K_{N1}\}(K_C)$) of the first symmetric key;

and **in that** the data received in step (b) contain a random number (R) and the first symmetric key ($Kc$) encrypted ($E\{K'_C\}(R|K_C)$) with the aid of the second symmetric key ($K'c$);

step (d) also comprising the decryption, with the aid of the second symmetric key ($K'c$), of the encrypted random number (R) received in step (b); and

the method also comprising , before step (e), a verification step (411) to

verify that the random number (R) decrypted in step (d) is identical to the random number (R) generated before step (a); step (e) being performed only in the event of positive verification.

4. The method as claimed in one of the preceding claims, **characterised in that** a domain identifier ($ID_{N1}$) is contained in the data (LECM1) received by the presentation device (202) and

**in that** said domain identifier is transmitted to the processing device (211) during step (a);

step (b) being performed only if said processing device contains the same domain identifier.

**Patentansprüche**

1. Verfahren für die Verarbeitung von Daten (LECM1), umfassend audiovisuelle Daten, die mit mindestens einem Kontrollwort (CW) verschlüsselt sind, wobei die Kontrollwörter mit einem ersten symmetrischen Schlüssel ($K_c$) verschlüsselt sind und der erste symmetrische Schlüssel ($K_c$) gemäß einem Verschlüsselungsverfahren verschlüsselt ist, das einem ersten Bereich eigen ist, so dass er nur mit Hilfe eines ersten, dem ersten Bereich eigenen Geheimnisses ($K_{N1}$) entschlüsselt werden kann, wobei die Daten in einer Präsentationsvorrichtung (202) empfangen werden, die an ein Netzwerk angeschlossen ist, das zu einem zweiten Bereich gehört, **dadurch gekennzeichnet, dass** es die Schritte umfasst, die für die Präsentationsvorrichtung darin bestehen:

(a) den ersten, mit Hilfe des ersten Geheimnisses ($K_{N1}$) verschlüsselten ($E\{K_{N1}\}(K_C)$) symmetrischen Schlüssel ($K_c$) an eine an das Netzwerk angeschlossene Verarbeitungsvorrichtung (211) zu übertragen (404),

(b) von der Verarbeitungsvorrichtung (211) den ersten, mit Hilfe eines zweiten symmetrischen Schlüssels ($K'_c$) verschlüsselten ($E\{K'_c\}(K_C)$) symmetrischen Schlüssel und den zweiten, mit Hilfe des zweiten, dem zweiten Bereich eigenen Geheimnisses ($K_{N2}$) verschlüsselten ($E\{K_{N2}\}(K'_c)$) symmetrischen Schlüssel zu empfangen (408), wobei das zweite Geheimnis in der Präsentationsvorrichtung enthalten ist.

2. Verfahren nach Anspruch 1, **dadurch gekennzeichnet, dass** es ferner die Schritte umfasst, die für die Präsentationsvorrichtung darin bestehen:

(c) mit Hilfe des zweiten Geheimnisses ($K_{N2}$) den zweiten Verschlüsselten symmetrischen Schlüssel ($K'_C$) zu entschlüsseln (409),

(d) mit Hilfe des zweiten symmetrischen Schlüssels (K'$_c$) den ersten verschlüsselten symmetrischen Schlüssel (K$_c$) zu entschlüsseln (410), und

(e) mit der Präsentationsvorrichtung mit Hilfe des ersten symmetrischen Schlüssels (K$_c$) die Kontrollwörter (CW) zu entschlüsseln.

3. Verfahren nach Anspruch 2, **dadurch gekennzeichnet, dass** es ferner vor Schritt (a) einen Schritt (403) umfasst, der für die Präsentationsvorrichtung darin besteht, eine Zufallszahl (R) zu generieren, wobei die Zufallszahl (R) in Schritt (a) mit der Verschlüsselung (E{K$_{N1}$}(K$_c$)) des ersten symmetrischen Schlüssels an die Verarbeitungsvorrichtung übertragen wird, und dass die in Schritt (b) empfangenen Daten eine Zufallszahl (R) und den ersten symmetrischen Schlüssel (K$_c$) enthalten, die mit Hilfe des zweiten symmetrischen Schlüssels (K'$_c$) verschlüsselt sind (E{K'$_c$}(R|K$_c$)), wobei Schritt (d) ebenfalls die Entschlüsselung der in Schritt (b) empfangenen verschlüsselten Zufallszahl (R) mit Hilfe des zweiten symmetrischen Schlüssels (K'$_c$) umfasst und das Verfahren ferner vor Schritt (e) einen Schritt der Überprüfung (411) umfasst, ob die in Schritt (d) entschlüsselte Zufallszahl (R) identisch ist mit der vor Schritt (a) generierten Zufallszahl (R) ist, wobei Schritt (e) nur im Fall einer positiven Überprüfung durchgeführt wird.

4. Verfahren nach einem der vorhergehenden Ansprüche, **dadurch gekennzeichnet, dass** eine Bereichskennung (ID$_{N1}$) in den Daten (LECM1) enthalten ist, welche durch die Präsentationsvorrichtung (202) empfangen werden, und dass die Bereichskennung in Schritt (a) an die Verarbeitungsvorrichtung (211) übertragen wird, wobei Schritt (b) nur durchgeführt wird, wenn die Verarbeitungsvorrichtung dieselbe Bereichskennung enthält.

EP 1 479 234 B1

Fig. 1

13

DVCR — 203

204

DTV — 220

Unité LECM

223

202

Décodeur — 210

Unité ECM — 213

201

211 — Convertisseur

212

$K'_C$
$E\{K_{N2}\}(K'_C)$

Terminal — 214

$ID_{N1}$

$K_{N1}$

Terminal — 221

— 222

$ID_{N2}$

$K_{N2}$
$K_{PUB\_T2}$
$K_{PRI\_T2}$

## Fig. 2

Dispositif de Présentation 202

Carte terminal/ convertisseur 211

Génération $K'_C$ et mémorisation — 100

Requête clé publique — 101

$K_{PUB\_T2}$ — 102

Chiffrement $K'_C$ avec $K_{PUB\_T2}$ — 103

$E\{K_{PUB\_T2}\}(K'_C)$ — 104

Déchiffrement $E\{K_{PUB\_T2}\}(K'_C)$ avec $K_{PRI\_T2}$ — 105

Chiffrement $K'_C$ avec $K_{N2}$ — 106

$E\{K_{N2}\}(K'_C)$ — 107

Mémorisation $E\{K_{N2}\}(K'_C)$ — 108

t

Fig. 3

DVCR 203 | Dispositif de Présentation 202 | Carte terminal/convertisseur 211

LECM1 | E{CW}(<données>)
401

Détection LECM1 provenant d'un autre domaine — 402

Génération R Mémorisation R
403

R | E{K$_{N1}$}(K$_C$) | ID$_{N1}$
404

Vérification ID$_{N1}$ — 405

Déchiffrement E{K$_{N1}$}(K$_C$) avec K$_{N1}$
406

Chiffrement R|K$_C$ avec K'$_C$
407

E{K$_{N2}$}(K'$_C$) | E{K'$_C$}(R|K$_C$)
408

Déchiffrement E{K$_{N2}$}(K'$_C$) avec K$_{N2}$
409

Déchiffrement E{K'$_C$}(R|K$_C$) avec K'$_C$
410

Vérification R — 411

Déchiffrement LECM1 Vérification intégrité — 412

Désembrouillage données
413

Effacement R et K$_C$ — 414

t

Fig. 4

EP 1 479 234 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0105568
- FR 0015894

- WO 0062505 A
- WO 0155850 A

**Littérature non-brevet citée dans la description**

- **J. DAEMEN ; V. RIJMEN.** *Proceedings from the first Advanced Encryption Standard Candidate Conference, National Institute of Standards and Technology,* Août 1998

- Secure Hash Standard. *FIPS PUB 180-1,* 1995